# FASCICULE DE BREVET EUROPEEN

(11) **EP 0 776 624 B1**
(45) Date de publication et mention de la délivrance du brevet: **07.10.1998**
(21) Numéro de dépôt: 96402506.8
(22) Date de dépôt: 21.11.1996
(51) Int. Cl.: A47J 37/07

(54) **Barbecue électrique à rôtissoire**
Elektrischer Barbecue mit Bratvorrichtung
Electrical barbecue with a frying appliance

(30) Priorité: 28.11.1995 FR 9514091
(43) Date de publication de la demande: 04.06.1997
(73) Titulaire: SEB S.A., 69130 Ecully (FR)
(72) Inventeur: Danen, Marc, 73410 Albens (FR)
(74) Mandataire: Keib, Gérard

(56) Documents cités:
- DE-A- 3 000 653
- FR-A- 2 299 785
- GB-A- 2 083 343
- US-A- 4 770 091
- US-A- 5 140 896

## Description

La présente invention concerne un barbecue électrique à rôtissoire.

De nombreux barbecues sont équipés de tournebroches qui permettent aux aliments de tourner près d'une résistante chauffante pendant la cuisson.

Généralement, la broche possède à une extrémité une poignée fixe accouplée à un moteur électrique fixe ou amovible.

Le mouvement de la broche, alourdie à une extrémité par le moteur, est mal aisé et induit des risques de brûlures ou de chutes de l'aliment cuit. L'endommagement ou la perte du moteur sont fréquents lorsque celui-ci est amovible.

D'autre part, les barbecues électriques possèdent une alimentation en courant pour les moyens de chauffage, du type résistance électrique. Cette résistance s'étend généralement dans une cuve de cuisson, sous une grille de cuisson.

L'ensemble constitué par la cuve, la grille et la résistance peut parfois pivoter sur le châssis entre une position horizontale et une position verticale.

L'utilisation de la rôtissoire avec la résistance en position horizontale est génératrice de fumées excessives dues à la carbonisation des graisses tombant sur les éléments chauffants et son utilisation avec la résistance en position verticale ne permet pas d'utiliser simultanément la grille, ni de récupérer les débris et jus de cuisson dans la cuve.

Le document DE 30 00 653 décrit un barbecue électrique à rôtissoire selon le préambule de la revendication 1, dans lequel les moyens de chauffage et la broche sont connectés électriquement à un même boîtier solidaire du châssis du barbecue. Cependant, les résistances de chauffage ne sont pas amovibles, ni le boîtier de connexion, ce qui rend mal aisé le nettoyage du châssis et de la cuve du barbecue. Cet aspect est particulièrement important lors de la cuisson à la broche d'aliments, de nombreuses projections de graisses et de jus sur les parois de la cuve et du châssis se produisant.

La présente invention a pour but de résoudre les inconvénients précités en proposant un barbecue permettant une utilisation simplifiée du barbecue èt une meilleure protection de l'utilisateur.

Le barbecue électrique à rôtissoire visé par l'invention comporte un châssis, une cuve de cuisson posée sur le châssis, des moyens de chauffage électrique et au moins une broche entraînée en rotation par un moteur électrique, le moteur étant logé dans un boîtier fixé au châssis, des moyens d'entraînement reliant le moteur à la broche, le boîtier comprenant en outre des moyens de connexion électrique adaptés à alimenter en courant électrique les moyens de chauffage électrique et un câble unique d'alimentation étant adapté à être branché à une source externe de courant électrique et à alimenter les moyens de connexion et le moteur.

Selon l'invention, le boîtier comprend sur une face supérieure une portion en creux adaptée à loger de manière amovible une partie d'une poignée fixée à une extrémité de la broche, la portion en creux possédant une ouverture traversante au droit de moyens d'entraînement logés dans le boîtier et la poignée de la broche comportant des moyens d'entraînement complémentaires adaptés à être en prise avec lesdits moyens d'entraînement lorsque la poignée est logée dans la partie en creux et le boîtier comprend sur cette face supérieure un logement adapté à recevoir de manière amovible une extrémité de connexion des moyens de chauffage électrique.

La mise en place des moyens de chauffage et de la broche est par conséquent facilitée par les logements prévus sur la face supérieure du boîtier. L'utilisateur peut aisément placer ou retirer les moyens de chauffage, notamment lors du nettoyage de la cuve de cuisson ou de la grille.

Le positionnement de la broche sur le barbecue est également facilité par la partie en creux ménagée sur le dessus du boîtier. Grâce aux moyens d'entraînement complémentaires portés par le boîtier et la broche, la mise en prise du moteur et de la broche ne requiert aucune manipulation autre que celle de poser la broche sur la partie en creux en mettant en vis à vis les moyens d'entraînement grâce à l'ouverture traversante du boîtier.

On obtient ainsi un barbecue électrique à broche et moyens de chauffage amovibles aisément démontable et remontable, ce qui facilite le nettoyage de la cuve de cuisson.

En outre, cette réalisation permet de concevoir un boîtier de connexion qui forme un tout amovible du châssis sur lequel il est fixé.

Les parties électriques nécessaires au fonctionnement du barbecue peuvent être isolées et séparées du châssis et de la cuve de cuisson lors du nettoyage du barbecue.

Selon une version préférée de l'invention, les moyens de connexion électrique débouchent sur une face inférieure du boîtier et un câble électrique est adapté à relier l'extrémité de connexion aux moyens de connexion.

La connexion par le câble électrique des moyens de chauffage au boîtier est protégée des salissures et des éventuelles projections de liquide en étant disposée sous le boîtier.

Selon une version avantageuse de l'invention, le châssis comprend un support amovible, un bord de la cuve reposant sur le support en saillie au-dessus du châssis, les moyens de chauffage reposant sur le châssis et le boîtier et la broche reposant sur la cuve et sur le boîtier.

La cuve peut ainsi être inclinée sur le châssis indépendamment des moyens de chauffage ou de la broche. Elle permet ainsi de faire pare-vent pendànt la cuisson des aliments à l'extérieur et les débris et jus de cuisson peuvent être récupérés dans la cuve.

D'autres particularités et avantages de l'invention apparaîtront encore dans la description ci-après.

Aux dessins annexés donnés à titre d'exemples non limitatifs :
- La figure 1 est une vue en perspective éclatée schématique du barbecue conforme à l'invention ;
- Les figures 2A et 2B sont des vues en coupe transversale du barbecue avec une cuve de cuisson respectivement horizontale ou inclinée ;
- La figure 3 est une vue en perspective éclatée illustrant le principe de fonctionnement de la rôtissoire du barbecue électrique ;
- La figure 4 est une vue en perspective de la rôtissoire de la figure 3 ;
- La figure 5 est une vue en perspective illustrant le positionnement des moyens de chauffage sur un barbecue conforme à l'invention ;
- La figure 6 est une vue en perspective analogue à la figure 5 illustrant la connexion des moyens de chauffage, dans une première position ; et
- La figure 7 est une vue en perspective analogue à la figure 6, les moyens de chauffage étant dans une deuxième position.

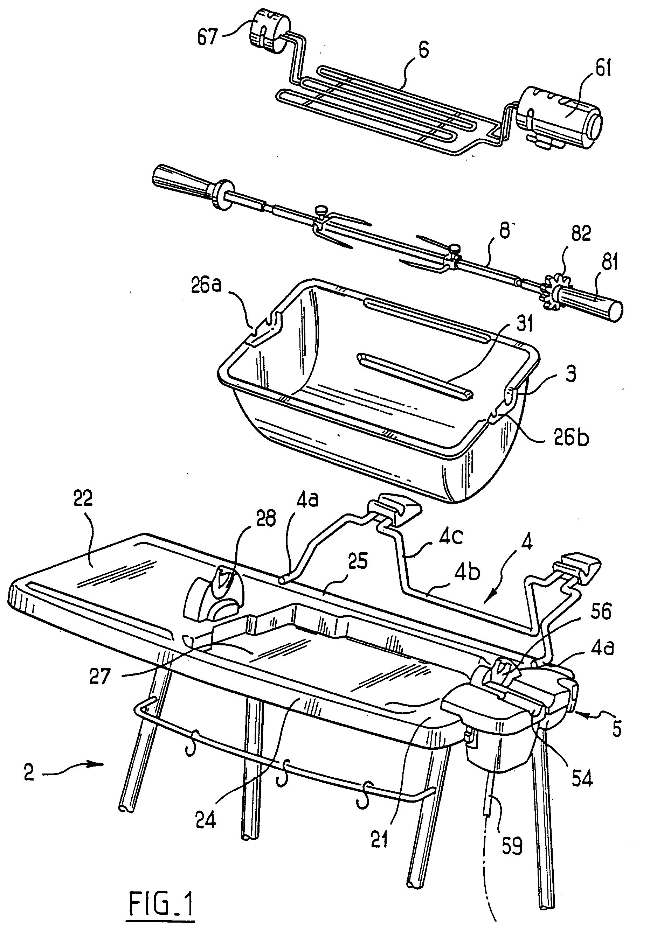

En référence à la figure 1, un barbecue électrique comporte un châssis (2) et une cuve de cuisson (3) amovible qui peut être posée sur ce châssis (2) . Ce dernier a une plate-forme sensiblement rectangulaire délimitée par deux extrémités (21 et 22) et deux côtés longitudinaux (24 et 25).

Cette plate-forme comprend une ouverture (27) pour loger la cuve de cuisson (3).

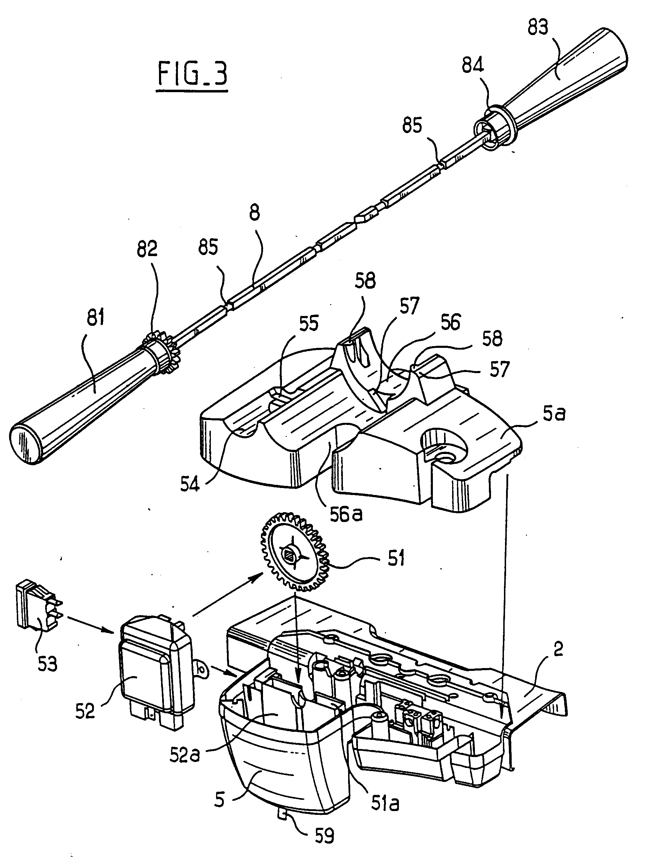

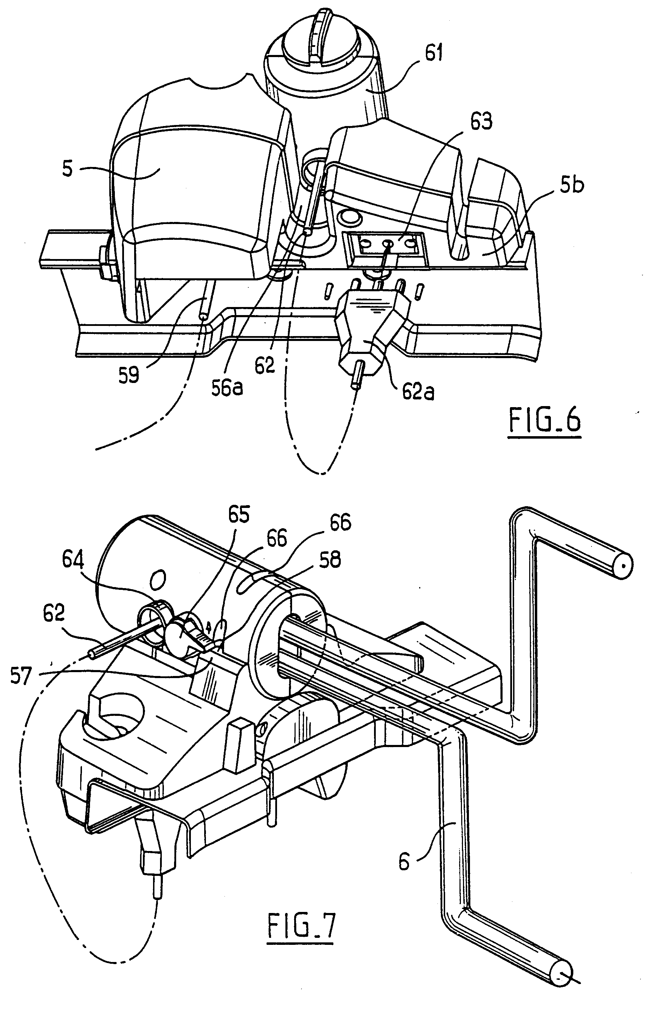

Des moyens de chauffage électrique, du type résistance tubulaire (6) illustrés à la figure 7, et une broche (8) de rôtissoire (voir figure 3) font également partie du barbecue.

Conformément à l'invention, la broche (8) est entraînée en rotation par un moteur électrique (52) logé dans un boîtier (5) fixé au châssis.

Ce moteur (52) peut, en cas de surcharge accidentelle et d'un mauvais équilibrage de la broche (8), redémarrer en sens contraire.

Des moyens d'entraînement (51, 82) relient le moteur (52) à la broche (8).

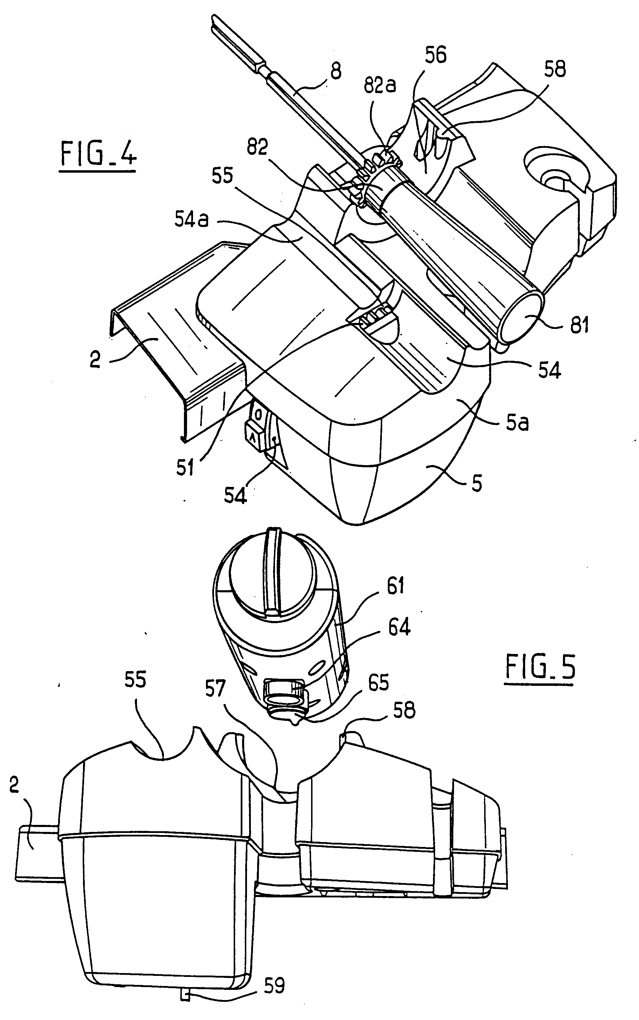

Comme représenté aux figures 3 et 4, la broche (8)comprend des moyens d'entraînement (82) adaptés à venir en prise avec des moyens d'entraînement complémentaires (51) logés dans le boîtier (5).

Dans cet exemple de réalisation, les moyens d'entraînement sont constitués de deux roues dentées (82,51) s'engrenant l'une dans l'autre.

L'une (51) des roues est entraînée en rotation par le moteur (52), à l'intérieur du boîtier (5). Ce dernier comprend, sur une face supérieure (5a) une ouverture traversante (55), telle une fenêtre, au droit de la roue dentée (51).

La broche (8) comporte à une extrémité une poignée (81), fixée généralement de manière inamovible, qui comprend une roue dentée (82) sur sa périphérie.

Le boîtier (5) comprend sur une face supérieure (5a) disposée légèrement au-dessus de la plate-forme du châssis (2), une portion en creux (54) adaptée à loger au moins une partie de la poignée (81) de la broche (8). La face supérieure (5a) forme un couvercle assemblé sur le boîtier (5) renfermant le moteur (52) et la roue dentée (51).

La roue dentée (82) de la broche (8) est alors en regard de la roue dentée (51) du boîtier (5), qui s'étend dans la fenêtre (55).

Cette portion en creux (54) est prolongée en direction de la cuve de cuisson par une gorge (54a) adaptée à loger la broche (8) débouchant de la poignée (81).

Des paliers (26a et 26b) sont prévus de chaque côté de la cuve de cuisson pour soutenir la broche (8) entraînée en rotation. Cette dernière comprend des parties (85) de section rétrécie adaptée à être placée dans les paliers (26a et 26b).

Comme représentée à la figure 3, l'extrémité effilée de la broche est protégée par une seconde poignée (83) amovible pour permettre l'introduction et le retrait d'aliments sur la broche (8) .

Cette poignée (83) peut être équipée d'une garde (84) protégeant l'utilisateur lors de sa mise en place sur l'extrémité effilée de la broche (8).

L'installation de la broche (8) sur le barbecue est donc très simple : il suffit de poser celle-ci sur les paliers (26a et 26b) et la partie en creux (54) du boîtier en s'assurant de la mise en regard des deux roues dentées (82, 51).

Un interrupteur (53), commandé par un bouton marche/arrêt (54) disposé sur le boîtier, permet de commander l'alimentation en courant électrique du moteur (52) et la rotation de la broche. Un câble d'alimentation (59) est adapté à être branché à une source externe de courant et à alimenter le moteur (52).

De préférence, le boîtier (5) comprend des logements séparés (52a, 51a) pour le moteur (52) et pour la roue dentée (51). Seule une ouverture est prévue pour permettre le passage de l'axe de rotation du moteur (52) en direction du centre de la roue dentée (51).

Ainsi, si du liquide pénètre dans le boîtier par la fenêtre (55), ce liquide n'entre pas en contact avec le moteur et le système électrique d'alimentation. Des trous peuvent être prévus au fond du logement (51a) de la roue dentée (51) pour permettre l'évacuation de ce liquide.

En fonctionnement, la broche (8) repose sur le palier (26a) solidaire de la cuve (3) et situé à l'opposé du boîtier (5) et est guidée par le palier (26b) solidaire de la cuve. La broche (8) repose également sur la roue dentée (51).

Lors de la mise en rotation de la broche (8), celle-ci vient buter contre l'une ou l'autre des surfaces de guidage du palier (26b). Une fois en butée contre ces surfaces, l'ensemble constitué par la broche (8) et les poignées (81 et 83) se met à tourner.

La denture de la roue dentée (82) pénètre suffisamment dans la fenêtre (55) du boîtier (5) pour être en appui sur la roue dentée (51)et l'engrener.

Le boîtier (5) comprend en outre, comme illustré à la figure (6), des moyens de connexion électrique (63) adaptés à alimenter en courant les moyens de chauffage électrique (6).

Les moyens de connexion (63), semblables à une prise de courant, sont alimentés en courant par le câble d'alimentation (59).

Le boîtier (5) comprend sur sa face supérieure (5a) un logement (56) adapté à recevoir une extrémité de connexion (61) des moyens de chauffage électrique (6).

Dans cet exemple, le logement (56) a une forme sensiblement cylindrique et l'extrémité de connexion (61) des moyens de chauffage (6) a une forme cylindrique complémentaire.

Comme bien illustré à la figure 6, les moyens de connexion électrique (63) débouchent sur la face inférieure du boîtier et sont ainsi protégés des projections de jus ou d'aliments lors de la cuisson. Ces moyens de connexion électrique (63) sont constitués d'une prise de courant femelle dans laquelle est introduite une prise de courant mâle (62a) reliée par un câble électrique (62) à l'extrémité de connexion (61).

De préférence, les moyens de chauffage sont constitués d'une résistance électrique tubulaire (6) s'étendant sensiblement dans un plan. Les extrémités de la résistance (6) sont connectées électriquement dans l'extrémité de connexion (61). Cette dernière est pivotante dans le logement (56) du boîtier (5) entre au moins deux positions de fonctionnement dans lesquelles le plan contenant la résistance (6) est respectivement horizontal ou vertical. Ces deux positions sont illustrées respectivement à la figure 6 et à la figure 7. L'extrémité de connexion est alors pivotée de 90° entre ces deux positions.

Une poignée (67) est fixée également à la résistance (6), à l'opposé de l'extrémité de connexion (61). Le châssis (2) comporte un palier (28) adapté à soutenir la poignée (67), disposé sur l'extrémité (22) opposée à l'extrémité (21) supportant le boîtier (5).

Le plan de la résistance étant décalé verticalement par rapport à l'axe de l'extrémité de connexion, deux positions horizontales peuvent être prévues : l'une dans laquelle la résistance est en position basse, sous une grille de cuisson, et l'autre dans laquelle la résistance est en position haute, l'extrémité de connexion étant pivotée de 180° entre ces deux positions.

L'extrémité de connexion (61) comporte une ouverture (64) de laquelle sort le câble d'alimentation (62) en courant électrique. Cette ouverture (64) est dans cet exemple ménagée dans le flanc cylindrique de l'extrémité de connexion (61). Elle pourrait également être prévue à l'extrémité de cette dernière.

De préférence, le boîtier (5) comprend une encoche (56a) dans le prolongement du logement (56) pour le passage du câble d'alimentation (62) issu de l'extrémité de connexion (61).

Cette dernière comporte en outre des éléments de sécurité (65) mobiles entre une position de marche et une position d'arrêt dans laquelle l'alimentation en courant électrique aux moyens de chauffage (6) est coupée, le logement (56) du boîtier (5) comprenant des moyens de sécurité (58) adaptés à déplacer les éléments de sécurité (65) dans ladite position de marche lorsque les moyens de chauffage (6) sont disposés sur le boîtier (5) dans une position normale de fonctionnement.

Les éléments de sécurité (65) peuvent être de manière connue constitués d'une came rotative maintenue par une force de rappel élastique dans la position d'arrêt.

Les moyens de sécurité sont constitués de saillies (57) adaptées à déplacer la came rotative, contre ladite force de rappel élastique, dans la position de marche, lorsque l'extrémité de connexion (61) est placée dans le logement (56) dans une position normale de fonctionnement.

Dans cet exemple, le logement (56) comporte deux saillies (57) disposées à 90° l'une de l'autre, déplaçant la came de sécurité (65) lorsque la résistance est placée verticalement ou horizontalement.

Afin de faciliter le positionnement de l'extrémité de connexion cylindrique (61) dans le logement cylindrique (56) et de maintenir en place la résistance (6), des encoches (66) et des profils complémentaires (58) sont prévues respectivement sur la surface de l'extrémité de connexion et à l'intérieur du logement (56).

Des encoches et profils similaires peuvent également être prévus sur la poignée (67) et le palier (28) du châssis (2).

L'extrémité de connexion (61) comprend une série d'encoches (66) disposées sur un cercle, sur la périphérie de l'extrémité de connexion (61). Une série d'encoches rectilignes pourrait également être ménagée sur la surface périphérique. Le positionnement de l'extrémité de connexion (61) sur le boîtier (5) est ainsi facilité dans la direction de l'axe longitudinal de l'extrémité de connexion (61).

Le boîtier (5) est monté de manière amovible sur le châssis (2) du barbecue (1). Il peut être clipsé par exemple sur le châssis (2), à une des extrémités (21) de celui-ci. Il est de préférence en matière plastique isolante évitant ainsi tout danger d'électrocution. De plus, grâce au boîtier (5), l'utilisateur ne peut pas se blesser avec le système d'entraînement.

Le châssis (2) comprend un support (4) amovible disposé au-dessus du châssis (2). Un bord (32) de la cuve de cuisson (3) repose sur ce support (4), les moyens de chauffage (6) reposant sur le châssis (2) et le boîtier (5) et la broche (8) sur le boîtier (5) et la cuve (3) grâce aux paliers (26a et 26b).

La cuve peut ainsi être inclinée indépendamment de la broche (8) et de la résistance (6), formant ainsi pare-vent. Les paliers (26a et 26b) sont ainsi sensiblement alignés avec la portion en creux (54) lorsque la cuve (3) est inclinée afin de supporter la broche (8). Le support (4) repose sur un côté (25) du châssis (2) perpendiculaire à l'extrémité (21).

Il comprend deux extrémités (4a) insérées respectivement dans le boîtier (5) et dans le palier (28) du châssis (2) lors de la mise en place du support (4) et une portion (4b, 4c) s'étendant au-dessus du châssis et reposant sur un côté longitudinal (25) du châssis (2).

Cette portion (4b, 4c) a sensiblement la forme d'un C, l'âme (4b) du C reposant sur le châssis (2) et les ailes (4c) s'étendant sensiblement verticalement au-dessus du châssis (2).

La cuve (3) comporte, sur une face intérieure, un épaulement (31) adapté à supporter une grille de cuisson (7), cet épaulement (31) étant disposé, lorsque la cuve de cuisson (3) repose sur le support (4) en saillie, dans un plan horizontal incluant un deuxième bord (33) de la cuve (3), opposé au bord (32) reposant sur le support (4).

Ainsi, la grille de cuisson (7), qui, en position horizontale de la cuve (3), repose sur les bords (32 et 33) de celle-ci, est maintenue horizontale sur l'épaulement (31) intérieur à la cuve (3) même lorsque cette dernière est inclinée. La distance entre le bord (32) et l'épaulement (31) est sensiblement égale à la hauteur de surélévation de la cuve (3) au-dessus du châssis (2), c'est-à-dire à la longueur des ailes (4c) perpendiculaires du support (4).

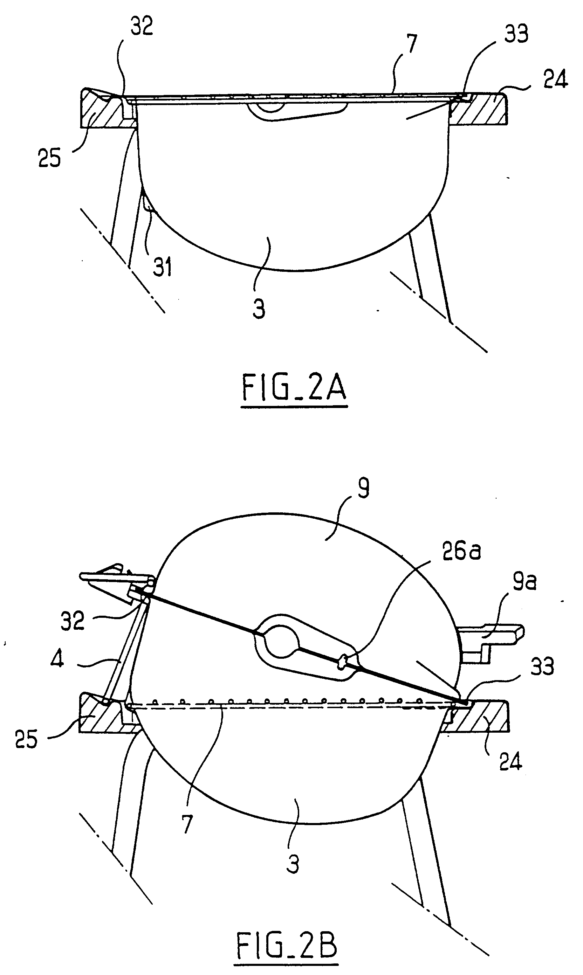

Comme illustré à la figure 2B, un couvercle (9) est adapté à recouvrir la cuve de cuisson (3). Ce couvercle (9) est fixé de manière pivotante, par des charnières par exemple, sur le support (4) de sorte qu'il peut être retiré lorsque la cuve (3) est horizontale. Une poignée (9a) permet de manipuler le couvercle (9).

Dans l'exemple de réalisation décrit ci-dessus, le barbecue a deux modes de fonctionnement principaux : un mode rôtissoire, avec la cuve (3) inclinée, la broche (8) reposant sur la cuve (3) et le boîtier (5), la résistance (6) étant disposée dans un plan vertical et le couvercle sur les charnières du support (4), et un mode barbecue dans lequel la cuve (3) est horizontale, la résistance étant dans un plan horizontal au-dessus ou au-dessous de la grille de cuisson.

Bien entendu, de nombreuses modifications peuvent être apportées à l'exemple décrit ci-dessus sans sortir du cadre de l'invention.

## Revendications

1. Barbecue électrique à rôtissoire comportant un châssis (2), une cuve de cuisson (3) posée sur le châssis (2), des moyens de chauffage électrique (6) et au moins une broche (8) entraînée en rotation par un moteur électrique (52), le moteur (52) étant logé dans un boîtier (5) fixé au châssis (2), le boîtier (5) comprenant en outre des moyens de connexion électrique (63) adaptés à alimenter en courant électrique les moyens de chauffage électrique (6), et un câble unique d'alimentation (59) étant adapté à être branché à une source externe de courant électrique et à alimenter les moyens de connexion (63) et le moteur (52), caractérisé en ce que le boîtier (5) comprend sur une face supérieure (5a) une portion en creux (54) adaptée à loger de manière amovible une partie d'une poignée (81) fixée à une extrémité de la broche (8), la portion en creux (54) possédant une ouverture traversante (55) au droit de moyens d'entraînement (51) logés dans le boîtier (8) et la poignée (81) de la broche (8) comportant des moyens d'entraînement complémentaires (82) adaptés à être en prise avec lesdits moyens d'entraînement (51) lorsque la poignée (81) est logée dans la portion en creux (54) et en ce que le boîtier (5) comprend sur ladite face supérieure (5a) un logement (56) adapté à recevoir de manière amovible une extrémité de connexion (61) des moyens de chauffage électrique (6).

2. Barbecue électrique conforme à la revendication 1, caractérisé en ce que lesdits moyens de connexion électrique (63) débouchent sur une face inférieure (5b) du boîtier (5) et un câble électrique (62) est adapté à relier l'extrémité de connexion (61) aux moyens de connexion (63).

3. Barbecue électrique conforme à la revendication 1 ou 2, caractérisé en ce que les moyens de chauffage sont constitués d'une résistance électrique (6) s'étendant sensiblement dans un plan, l'extrémité de connexion (61) étant pivotante dans ledit logement (56) entre au moins deux positions de fonctionnement dans lesquelles ledit plan est respectivement horizontal ou vertical.

4. Barbecue électrique conforme à l'une des revendications 1 à 3, caractérisé en ce que l'extrémité de connexion (61) comporte des éléments de sécurité (65) mobiles entre une position de marche et une position d'arrêt dans laquelle l'alimentation en courant électrique aux moyens de chauffage (6) est coupée, le logement (56) du boîtier (5) comprenant des moyens de sécurité (58) adaptés à déplacer les éléments de sécurité (65) dans ladite position de marche lorsque les moyens de chauffage (6) sont disposés sur le boîtier dans une position normale de fonctionnement.

5. Barbecue électrique conforme à l'une des revendications 1 à 4, caractérisé en ce que le châssis (2) comprend un support (4) amovible, un bord (32) de la cuve de cuisson (3) reposant sur ledit support (4), en saillie au-dessus du châssis (2), les moyens de chauffage (6) reposant sur le châssis (2) et le boîtier (5) et la broche (8) reposant sur le boîtier (5) et la cuve (3).

6. Barbecue électrique conforme à la revendication 5, caractérisé en ce que la cuve (3) comporte, sur une face intérieure, un épaulement (31) adapté à supporter une grille de cuisson (7), ledit épaulement (31) étant disposé, lorsque la cuve de cuisson (3) repose sur le support (4) en saillie, dans un plan horizontal incluant un deuxième bord (33) de la cuve(3), opposé audit bord (32) reposant sur le support (4).

7. Barbecue électrique conforme à l'une des revendications 5 ou 6, caractérisé en ce qu'un couvercle (9) adapté à recouvrir la cuve de cuisson (3) est fixé de manière pivotante audit support (4).

8. Barbecue électrique conforme à l'une des revendications 1 à 7, caractérisé en ce que le boîtier (5) est en matière plastique isolante.

9. Barbecue électrique conforme à l'une des revendications 1 à 8, caractérisé en ce que le boîtier (5) est monté de manière amovible sur le châssis (2).

10. Barbecue électrique conforme à l'une des revendications 5 à 7, caractérisé en ce que le boîtier (5) est fixé à une extrémité (21) du châssis, le support (4) reposant sur un côté (25) du châssis (2) perpendiculaire à ladite extrémité (21).

## Claims

1. An electric barbecue with a spit-roaster, comprising a frame (2), a cooking pan (3) placed on the frame (2), electric heating means (6) and at least one spit (8) driven in rotation by an electric motor (52), the motor (52) being accommodated in a case (5) fixed to the frame (2), the case (5) comprising, moreover, electric connecting means (63) fitted for supplying the electric heating means (6) with electric current, and a single feeder cable (59) being fit to be connected to an external electric current source and to feed the connecting means (63) and the motor (52); characterized in that the case (5) has on its top (5a) a hollowed-out portion (54) suitable for accommodating in a detachable manner a part of a handle (81) fixed to one end of the spit (8), the hollowed-out portion (54) having a through opening (55) opposite the drive means (51) accommodated in the case (5), and the handle (81) of the spit (8) comprising complementary drive means (82) fit to come into engagement with the said drive means (51) when the handle (81) is accommodated in the hollowed-out portion (54); and in that the case (5) has on the said top (5a) a seat (56) fit for receiving a connecting end (61) of the electric heating means (6) in a detachable manner.

2. An electric barbecue according to claim 1, characterized in that the said electric connecting means (63) emerge on an internal side (5b) of the case (5), and an electric cable (62) is fitted for connecting the connecting end (61) to the electric connecting means (63).

3. An electric barbecue according to claim 1 or 2, characterized in that the heating means are constituted by an electric resistor (6) extending substantially in one plane, the connecting end (61) pivoting in the said seat (56) between at least two operative positions wherein the said plane is respectively horizontal or vertical.

4. An electric barbecue according to one of claims 1 to 3, characterized in that the connecting end (61) comprises safety elements (65) movable between an operative position and an off position wherein the current supply to the heating means (6) is cut off, the seat (56) of the case (5) comprising safety elements (58) suitable for displacing the safety elements (65) into the said operative position when the electric heating means (6) are disposed on the case in a normal operative position.

5. An electric barbecue according to one of claims 1 to 4, characterized in that the frame (2) comprises a detachable support (4), one edge (32) of the cooking pan (3) resting on the said support (4), projecting beyond the frame (2), the heating means (6) resting on the frame (2) and the case (5), and the spit (8) resting on the case (5) and the pan (3).

6. An electric barbecue according to claim 5, characterized in that the pan (3) has on an internal side a shoulder (31) suitable for supporting a cooking grill (7), the said shoulder (31) being disposed in a horizontal plane including a second edge (33) of the pan (3) on the opposite side to the said edge (32) resting on the support (4), when the cooking pan (3) rests on the projecting support (4).

7. An electric barbecue according to one of claims 5 or 6, characterized in that a lid (9) suitable for covering the cooking pan (3) is pivotably mounted on the said support (4).

8. An electric barbecue according to one of claims 1 to 7, characterized in that the case (5) is made of a plastic insulating material.

9. An electric barbecue according to one of claims 1 to 8, characterized in that the case (5) is detachably mounted on the frame (2).

10. An electric barbecue according to one of claims 5 to 7, characterized in that the case (5) is fixed to one end (21) of the frame, the support (4) resting on one side (25) of the frame (2) perpendicular to the said end (21).

## Patentansprüche

1. Elektrischer Barbecue mit Bratvorrichtung, umfassend ein Gestell (2), eine Garwanne (3), die auf das Gestell (2) gesetzt ist, eine elektrische Beheizungseinrichtung (6) und zumindest eine Spindel (8), die durch einen Elektromotor (52) in Drehung versetzt wird, wobei der Motor (52) in einem an dem Gestell (2) fixierten Gehäuse (5) untergebracht ist, wobei das Gehäuse (5) ferner eine elektrische Anschlußeinrichtung (63) umfaßt, die dazu bestimmt ist, die elektrische Beheizungseinrichtung (6) mit elektrischem Strom zu versorgen, und ein einziges Stromversorgungskabel (59), welches zum Anschluß an eine externe elektrische Stromquelle und zur Versorgung der Anschlußeinrichtung (63) und des Motors (52) bestimmt ist, dadurch gekennzeichnet, daß das Gehäuse (5) auf einer Oberseite (5a) einen vertieften Abschnitt (54) aufweist, der dazu bestimmt ist, in abnehmbarer Weise einen Teil eines Griffs (81), der an einem Endabschnitt der Spindel (8) fixiert ist, aufzunehmen, wobei der vertiefte Abschnitt (54) eine Durchgangsöffnung (55) in Ausrichtung mit Antriebsmitteln (51) aufweist, die in dem Gehäuse (8) angeordnet sind, wobei der Griff (81) der Spindel (8) komplementäre Angriffsmittel (82) besitzt, die dazu bestimmt sind, im Eingriff mit den Antriebsmitteln (51) zu stehen, wenn sich der Griff (81) in dem vertieften Abschnitt (54) befindet, wobei das Gehäuse (5) auf der Oberseite (5a) einen Aufnahmeraum (56) besitzt, der dazu bestimmt ist, in abnehmbarer Weise einen Anschluß-Endabschnitt (61) der elektrischen Beheizungseinrichtung (6) aufzunehmen.

2. Elektrischer Barbecue nach Anspruch 1, dadurch gekennzeichnet, daß die elektrische Anschlußeinrichtung (63) auf einer Unterseite (5b) des Gehäuses (5) mündet, wobei ein Elektrokabel (62) dazu bestimmt ist, den Anschluß-Endabschnitt (61) mit der Anschlußeinrichtung (63) zu verbinden.

3. Elektrischer Barbecue nach Anspruch 1 oder 2, dadurch gekennzeichnet, daß die Beheizungseinrichtung aus einem elektrischen Widerstand (6) besteht, der sich im wesentlichen in einer Ebene erstreckt, wobei der Anschluß-Endabschnitt (61) schwenkbar in dem genannten Aufnahmeraum (56) zwischen zumindest zwei Betriebspositionen ist, in denen die genannte Ebene entweder horizontal oder vertikal ist.

4. Elektrischer Barbecue nach einem der Ansprüche 1 bis 3, dadurch gekennzeichnet, daß der Anschluß-Endabschnitt (61) eine Sicherheitseinrichtung (65) aufweist, die zwischen einer Ein-Stellung und einer Aus-Stellung, in der die elektrische Stromversorgung für die Beheizungseinrichtung (6) unterbrochen ist, beweglich ist, wobei der Aufnahmeraum (56) des Gehäuses (5) ein Sicherheitsmittel (58) aufweist, welches dazu bestimmt ist, die Sicherheitseinrichtung (65) in die genannte Ein-Position zu verlagern, wenn die Beheizungseinrichtung (6) auf dem Gehäuse in einer normalen Betriebsstellung angeordnet ist.

5. Elektrischer Barbecue nach einem der Ansprüche 1 bis 4, dadurch gekennzeichnet, daß das Gestell (2) eine abnehmbare Stütze (4) aufweist, wobei ein Rand (32) der Garwanne (3) auf der genannten Stütze (4) aufliegt, oberhalb des Gestells (2) vorragend, wobei die Beheizungseinrichtung (6) auf dem Gestell (2) und dem Gehäuse (5) aufliegt, und die Spindel (8) auf dem Gehäuse (5) und der Wanne (3) aufliegt.

6. Elektrischer Barbecue nach Anspruch 5, dadurch gekennzeichnet, daß die Wanne (3) auf einer Innenfläche einen Absatz (31) aufweist, der dazu bestimmt ist, einen Garrost (7) zu tragen, wobei der Absatz (31) dann, wenn die Garwanne (3) auf dem vorspringenden Träger (4) ruht, in einer horizontalen Ebene angeordnet ist, die einen zweiten Rand (33) der Wanne (3) beinhaltet, der dem Rand (32), der auf dem Träger (4) aufliegt, gegenüberliegt.

7. Elektrischer Barbecue nach einem der Ansprüche 5 oder 6, dadurch gekennzeichnet, daß ein Deckel (9), der dazu bestimmt ist, die Garwanne (3) abzudecken, in schwenkbarer Weise an dem Träger (4) befestigt ist.

8. Elektrischer Barbecue nach einem der Ansprüche 1 bis 7, dadurch gekennzeichnet, daß das Gehäuse (5) aus isolierendem Kunststoffmaterial besteht.

9. Elektrischer Barbecue nach einem der Ansprüche 1 bis 8, dadurch gekennzeichnet, daß das Gehäuse (5) in abnehmbarer Weise auf dem Gestell (2) angebracht ist.

10. Elektrischer Barbecue nach einem der Ansprüche 5 bis 7, dadurch gekennzeichnet, daß das Gehäuse (5) an einem Endabschnitt (21) des Gestells fixiert ist, wobei der Träger (4) auf einer Seite (25) des Gestells (2) senkrecht zu dem genannten Endabschnitt (21) aufliegt.
